# EUROPEAN PATENT APPLICATION

(11) **EP 4 796 519 A1**
(43) Date of publication of application: **26.08.2026**
(21) Application number: 25158899.2
(22) Date of filing: 19.02.2025
(51) Int. Cl.: C05F 11/02, C05G 3/80, C05G 5/12, C09K 17/04, C10B 53/02

(54) **BIOCHAR COMPOSITION**

(71) Applicant: Insamlingsstiftelsen Restart Earth Foundation, 137 95 Österhaninge (SE)
(72) Inventor: FRÖSTAD, Per, 137 95 Österhaninge (SE)
(74) Representative: Kransell & Wennborg KB

(57) **Abstract**

There is provided a method for production of an impregnated biochar composition for use in agriculture, wherein the method comprises the following steps:
a) providing biomass;
b) treating the biomass at a temperature of ≥ 300 °C to form biochar;
c) impregnating the formed biochar with pyroligneous acid so that an impregnated biochar composition is formed, wherein the composition comprises:
- 10-60 wt% pyroligneous acid based on the dry content of the composition; and
- 40-90 wt% biochar based on the dry content of the composition.

## Description

### TECHNICAL FIELD

The present disclosure relates to the field of biochar, and in particular to impregnated biochar for use in agriculture.

### BACKGROUND

In recent years, climate awareness has been pushing for solutions in various sectors replacing fossil-based sources with renewable sources.

One such sector is within agriculture. Agriculture is the practice of cultivating soil, growing crops, and raising animals for food, fiber, medicinal plants, and other products used to sustain and enhance human life. It is a critical component of human civilization, providing the primary source of food and raw materials.

Fertilizers are used in agriculture. Fertilizers are substances that provide essential nutrients to plants to enhance their growth and productivity. They can be artificial or organic. Fertilizers help improve soil fertility, increase crop yields, and support sustainable agriculture when used appropriately.

Artificial fertilizers are synthetically produced with specific nutrient compositions. Such fertilizers can deteriorate soil structure, reduce production potential, accumulate toxic elements leading to decreases microbial activity leading to nutrient imbalance, nitrate accumulation and increased acidification.

Organic fertilizer, derived from natural sources like compost, manure, or bone meal, although having many advantages, have other downsides including inconvenient transportation.

Biochar is a carbon-rich material which can be used as a soil supplement in agriculture.

However, the effectiveness of biochar in agricultural applications can be further improved and there remains a need for biochar formulations that optimise its agronomic benefits while maintaining economic and environmental sustainability.

### SUMMARY

One objective of the present disclosure is to provide a soil supplement which improves growth of crops, sequester carbon and nurtures the soil.

Accordingly, as a first aspect of the present disclosure there is provided a method for production of an impregnated biochar composition for use in agriculture, wherein the method comprises the following steps:
a) providing biomass;
b) treating the biomass at a temperature of ≥ 300 °C to form biochar;
c) impregnating the formed biochar with pyroligneous acid so that an impregnated biochar composition is formed, wherein the composition comprises:
   - 10-60 wt% pyroligneous acid based on the dry content of the composition; and
   - 40-90 wt% biochar based on the dry content of the composition.

As a second aspect of the present disclosure, there is provided a system comprising:
- a reactor configured to treat biomass at a temperature of ≥ 300 °C to form biochar;
- an impregnation tank configured to impregnate the biochar with pyroligneous acid arranged downstream of the reactor;
- a compressor device configured to compress the impregnated biochar; and
- a granulation device configured to form granules from compressed impregnated biochar composition. wherein the formed granules in the granulation device have an average granular size of ≤ 1 cm preferably ≥0.1 and ≤1 cm, as measured according to ISO 3310-1:2016.

As a third aspect of the present disclosure there is provided an impregnated biochar composition for use in agriculture comprising:
- 10-60 wt% pyroligneous acid based on the dry content of the composition; and
- 40-90 wt% biochar based on the dry content of the composition

As a fourth aspect of the present disclosure there is provided use of the composition according to the third aspect as a soil supplement in agriculture.

### BRIEF DESCRIPTION OF THE DRAWINGS

Fig 1 shows an example of method steps of the first aspect of the present disclosure.
Fig 2 shows an example embodiment of the second aspect of the present disclosure.
Fig 3 shows another example embodiment of the second aspect of the present disclosure.
Fig 4 shows yet another example embodiment of the second aspect of the present disclosure.
Fig 5 shows yet another example embodiment of the second aspect of the present disclosure.
Fig 6 shows yet another example embodiment of the second aspect of the present disclosure.
Fig 7 shows yet another example embodiment of the second aspect of the present disclosure.
Fig. 8 is a flow chart outlining steps of a method of automatically controlling the conditions of the reactor based on formed hydrogen gas.
Fig. 9 is a flow chart outlining steps of a method of automatically controlling the conditions of the reactor based on formed biochar.

### DETAILED DESCRIPTION

According to a first aspect of the present disclosure, there is provided a method for production of an impregnated biochar composition for use in agriculture, wherein the method comprises the following steps:
a) providing biomass;
b) treating the biomass at a temperature of ≥ 300 °C to form biochar;
c) impregnating the formed biochar with pyroligneous acid so that an impregnated biochar composition is formed, wherein the composition comprises:
   - 10-60 wt% pyroligneous acid based on the dry content of the composition; and
   - 40-90 wt% biochar based on the dry content of the composition.

Biochar is a carbon-rich material produced from biomass under limited oxygen conditions. It is advantageous to use in agriculture due to its ability to improve soil properties, enhance crop productivity, and contribute to carbon sequestration. When incorporated into soil, biochar can enhance water retention, increase nutrient availability, and promote beneficial microbial activity, thereby improving soil fertility and plant growth. Biochar exhibits a high degree of stability, making it an effective long-term soil amendment that reduces greenhouse gas emissions by sequestering carbon.

There is no limitation in the type of biomass. It is typically agricultural and/or forestry biomass. Agricultural and forestry biomass refers to organic materials obtained from farming and forestry activities. Agricultural biomass includes plant and animal-based materials such as crop residues like straw, corn stalks, and husks. It also encompasses energy crops like switchgrass and miscanthus, along with agricultural processing waste such as sugarcane bagasse and fruit peels. Forestry biomass originates from forest management, logging, and wood processing. It includes materials such as logging residues, including branches and tree tops, as well as wood processing waste like sawdust, bark, and sawmill scraps. Forest thinning and deadwood are also included. It is advantageous if the biomass contains both cellulose and lignin.

Pyroligneous acid is also known as wood vinegar. It is a crude liquid that contains water, organic acids (e.g., acetic acid), ketones, phenols, and other volatile compounds. During conversion of biomass to biochar, pyroligneous acid may be formed. The pyroligneous acid used in step c) may therefore be pyroligneous acid formed in the treatment process of step b). The pyroligneous acid may also be supplied from an external source. The pyroligneous acid may also be supplied by a mixture of produced pyroligneous acid in step b) and an external source. It is beneficial to at least partly supply the pyroligneous acid from step b) as it reduces the need for external pyroligneous acid.

The treatment in step b) is typically a pyrolysis or gasification, preferably pyrolysis. Pyrolysis is a thermal decomposition process that breaks down organic materials at high temperatures, typically between 300-900°C, in the absence of oxygen. This process converts biomass into biochar and syngas as well as bio-oil and/or pyroligneous acid. Syngas, or synthesis gas, is a mixture of carbon monoxide

(CO), hydrogen (H2), and carbon dioxide (CO2) produced through processes like gasification or pyrolysis of organic materials. Accordingly, in both pyrolysis and gasification syngas that contains hydrogen gas is formed. Hydrogen gas may be separated from the syngas produced in step b).

In case syngas is formed in step b) and hydrogen gas is separated from the syngas, the hydrogen gas may be used as a fuel source in step b) or collected separately. It is beneficial to use the gas as a fuel source as it decreases the overall energy consumption of the method. It is also beneficial to collect the hydrogen gas to be used elsewhere for provision of energy in a separate application.

The method may further comprise using a computer with a processor and a memory that is connected to a measuring device for measuring the amount of hydrogen gas extracted and correlate the value to a predefined threshold value.

Pyroligneous acid may be obtained directly from the condensation of vapors during slow pyrolysis of wood or other lignocellulosic biomass at temperatures around 300-500°C. When left to settle, it separates into different fractions, with the acidic aqueous phase that can be refined into wood vinegar. Bio-oil, is a hydrophobic liquid typically obtained from fast pyrolysis at higher temperatures (450-600°C) with rapid cooling of vapors. Bio-oil has a high oxygen content (35-50%), which makes it chemically different from fossil fuels, leading to lower energy density.

The biomass is typically treated at a temperature of 300-900 °C, such as 400-900 °C, such as 400-800 °C, such as 450-750 °C to form biochar in step b).

The composition typically comprises 20-60 wt%, such as 25-55 wt%, such as 30-55 wt% pyroligneous acid based on the dry content of the composition.

The composition typically comprises 40-80 wt%, such as 45-75 wt%, such as 45-70 wt% biochar based on the dry content of the composition.

The composition typically comprises at least 85 wt%, such as at least 90wt%, such as at least 95 wt%, pyroligneous acid and biochar based on the dry content of the composition.

The method may further comprise:
- step d) compressing the impregnated biochar composition.

It is beneficial to compress the impregnated biochar. The pyroligneous acid is released into the soil when exposed to water, in particular rainwater and/or water present in the ground. This release is preferably occurring at a moderate pace. If the release is too fast, the doses can be so high that the pyroligneous acid may instead of being a fertilizer can act as a pesticide. By compressing the impregnated biochar, a beneficial structure of the biochar is formed from where the pyroligneous acid is released at a controlled pace and yet holds a substantial amount of pyroligneous acid so that the effect lasts for a long time. Prior to compressing, the impregnated biochar is typically dried, at least so that the biochar is not wet by the acid on its surface.

The method may also further comprise:
- step e) formation of granules from the compressed impregnated biochar composition, wherein the granules have an average granular size of ≤ 1 cm preferably ≥0.1 and ≤1 cm, as measured according to ISO 3310-1:2016.

It is beneficial to for granules of the compressed and impregnated biochar composition. If the composition is spread out in the soil in too large pieces, an excessive amount of biochar will be needed to cover a farmland. Moreover, usage of existing machinery and equipment for spreading out fertilizers is facilitated if the granules are not too large. Accordingly, the granules typically have an average granular size of ≤ 1 cm as measured according to ISO 3310-1:2016. It is further advantageous if the granules have an average granular size of ≥0.1 and ≤1 cm. Too small particles, i.e. having a size of <0.1 cm, are beneficially sorted out. One way of sorting out such particle sizes is to sift the particles over a mesh with mesh size of 0.1 cm keeping the accept fraction not passing the mesh followed by sifting over a mesh with a mesh size of 1 cm keeping the reject fraction passing through the mesh. It is desirable that the biochar has a structure and size allowing the pyroligneous acid to be released at a controlled pace and yet hold a substantial amount of pyroligneous acid so that the effect lasts for a long time. In case the particles are too small, the amount of pyroligneous acid that the biochar can hold per particle is very limited meaning that the desirable long-lasting effect will not be provided, or at least heavily reduced. Moreover, it is advantageous that the particles are not too small, as they can dust, which is troublesome in both handling and even spreading in the soil.

According to a second aspect of the present disclosure, there is provided a system for production of an impregnated biochar composition for use in agriculture comprising:
- a reactor configured for treatment of biomass at a temperature of ≥ 300 °C to form biochar;
- an impregnation tank for impregnation of the biochar with pyroligneous acid arranged downstream of the reactor;
- a compressor device for compressing the impregnated biochar; and
- a granulation device for formation of granules from compressed impregnated biochar composition. wherein the formed granules in the granulation device have an average granular size of ≤ 1 cm preferably ≥0.1 and ≤1 cm, as measured according to ISO 3310-1:2016.

The reactor typically has an inlet for receiving biomass to be treated, and an outlet for removal of formed biochar.

The system may further comprise:
- a first separation arrangement configured for separation of syngas from the reactor;
- a second separation arrangement for separation of hydrogen gas from the syngas; and
- a routing arrangement for routing the hydrogen gas to a heater of the reactor or to a collection unit for collecting the hydrogen gas.

For the avoidance of doubt, and as is understood by the skilled person, in such case the reactor comprises an outlet for removal of syngas. Such outlet is in fluid connection with the first separation arrangement. Typically, the first separation arrangement is directly connected to or forming part of the outlet. By such separation, one outlet is configured for extraction of formed biochar and this second outlet is configured for extraction of the formed syngas. Alternatively, the first outlet is configured for extraction of both biochar and syngas, and the first separation arrangement is arranged downstream of the outlet of the reactor.

There is no limitation on type of second separation arrangement for separation of hydrogen gas from the syngas. The second separation arrangement may for example be a sieve, which separates hydrogen gas from the rest of the gases or the other gases from the hydrogen gas.

The routing arrangement for routing the hydrogen gas to a heater of the reactor or to a collection unit for collecting the hydrogen gas is typically a valve connected to a pipe, tube, conduit or the like.

The system beneficially further comprises a control unit that is connected to a hydrogen gas sensor that is configured to measure measure the amount of hydrogen gas in the syngas. The control unit is also connected to first weighing device that measures the amount of biomass that is supplied to the reactor and to a second weighing device that measures the amount of biochar produced. The control unit is configured to automatically analyse the amount of produced hydrogen gas, amount of produced biochar and amount of supplied biomass. In case the measured amount for any of the hydrogen gas and/or biochar is below a certain predefined threshold value based on the amount of supplied biomass, the control unit is configured to send out a signal indicative of a too low value. Automating analysis using a predefined threshold definition ensures consistent and accurate detection, reducing the variability associated with manual inspection. By providing a signal when a too low level of hydrogen gas or too low amount of biochar is detected, the system enables rapid feedback and corrective actions, improving both process efficiency and final output of hydrogen gas and biochar.

Accordingly, the system typically comprises a hydrogen gas sensor arranged after the first separation arrangement and configured to determine a hydrogen gas content of the syngas output from the first separation arrangement; and
a control unit configured to:
receive, from the hydrogen gas sensor, a signal indicative of a hydrogen gas content;
compare the received hydrogen gas content with a predetermined hydrogen gas content threshold value; and
if the received hydrogen gas content is below the predetermined threshold value, provide a signal indicative of a too low hydrogen gas content.

A signal indicative of a too low value can take various forms depending on the system configuration. In automated production, the signal may be a digital output sent to a control system automatically adjusting the process by e.g. altering temperature and/or oxygen content in the reactor, or halting production. Detection of too low value could also trigger a visual or audio alert, notifying operators of gas and/or biochar production. Alternatively, or in combination, the signal could contribute to data logging or statistical reporting, recording defect details for later analysis and quality control to helps track production trends. Additionally, the signal might serve as part of a feedback loop, allowing real-time adjustments to upstream processes, such as modifying feed rate of biomass, to prevent future problems of too low production rate of hydrogen gas and/or biochar.

The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device. The control unit may also comprise or be connected to a memory which may include any of volatile memory elements (e.g., random access memory (RAM, such as DRAM, SRAM, SDRAM, etc.)), nonvolatile memory elements (e.g., ROM, hard drive, etc.), and combinations thereof.

The amount of biochar and hydrogen gas produced depends on temperature and oxygen level, but also on the type of biomass meaning that different types of biomass might form hydrogen gas at slightly different temperatures and oxygen levels. It is, thereby, advantageous to have an automatic control system governing the reactor to allow for optimised output of both biomass and hydrogen gas.

The production of biochar and hydrogen gas from biomass pyrolysis depends on the type of biomass used, particularly its composition, including lignin, cellulose, and hemicellulose content. For example, agricultural biomass generally has lower lignin and higher cellulose and hemicellulose content. This results in higher gas yields, including hydrogen, but lower biochar production due to its lower fixed carbon content. Forestry biomass, on the other hand, contains higher lignin and lower hemicellulose, leading to higher biochar yields and produces less hydrogen gas than agricultural biomass. Higher temperatures (500-900°C) favour hydrogen production by breaking down tars and increasing gasification efficiency. Accordingly, in case the hydrogen gas production is below the threshold value while the biochar production is above its threshold value, the control unit can send a signal to increase temperature of the reactor to favour hydrogen gas production. On the other hand, Low temperatures (300-500°C) favour biochar production by minimizing gasification. Moreover, the heating rate of the reactor is important: slow heating rates (≤10°C/min) enhance biochar yield by allowing more complete carbonization, while fast heating rates decompose volatile compounds quickly, reducing biochar yield. Residence time is also an important factor: longer solid residence times in the reactor increase char formation by allowing more secondary reactions, while short residence times lead to more bio-oil and gas formation.

The control unit is typically further configured to:
if the received hydrogen gas content is below the predetermined threshold value, increase/decrease a temperature and/or increase/decrease heating rate and/or increase/decrease residence time in the reactor.

There is no limitation on type of hydrogen gas sensor measuring the hydrogen gas level in the syngas. It can be a sensor, such as a Electrochemical Hydrogen Sensors - measuring hydrogen by oxidation at an electrode, providing accurate ppm-level detection; Semiconductor Hydrogen Sensors - using metal oxides (e.g., tin oxide) that change resistance in the presence of hydrogen; or Palladium-based Sensors - detecting hydrogen by absorption and resistance changes in palladium films. The hydrogen gas sensor can also be provided in the form of a hydrogen gas analyser, such as Gas Chromatography (GC) - separating and quantifying hydrogen gas with high accuracy; or a mass spectrometer - detecting and analysing hydrogen composition in gas mixtures.

The system may further comprise:
a first weighing device configured the weigh an amount biomass being supplied to the reactor;
a second weighing device configured the weigh an amount of biochar being provided from the reactor; and
a control unit configured to:
   receive, from the first weighing device, a biomass weight;
   receive, from the second weighing device, a biochar weight;
   compare the biochar weight with the biomass weight; and
   if a quota between biochar weight and biomass weight is below a predetermined weight quota threshold value, increase/decrease a temperature and/or increase/decrease heating rate and/or increase/decrease residence time in the reactor.

There is no limitation on the type of first weighing device of the biomass. It can e.g. be a scale measuring how much biomass in weight that is supplied to the reactor.

Likewise, there is no limitation on the type of second weighing device of the biochar. It can e.g. be a scale measuring how much biochar in weight is being produced in the reactor and thereby provided.

For the avoidance of doubt, the control unit configured to: receive, from the first weighing device, a biomass weight; and receive, from the second weighing device, a biochar weight, can be the same as the control unit configured to: receive, from the hydrogen gas sensor, a signal indicative of a hydrogen gas content. They can also be different control units, i.e. a first control unit configured to: receive, from the hydrogen gas sensor, a signal indicative of a hydrogen gas content and a second control unit configured to: receive, from the first weighing device, a biomass weight; and receive, from the second weighing device, a biochar weight. Preferably, it is the same control unit to allow for an optimised and balanced output of both hydrogen gas and biochar.

The examples and embodiments discussed above in connection to the first aspect apply to the second aspect *mutatis mutandis.*

According to a third aspect of the present disclosure, there is provided an impregnated biochar composition for use in agriculture comprising:
- 10-60 wt% pyroligneous acid based on the dry content of the composition; and
- 40-90 wt% biochar based on the dry content of the composition.

The composition is typically in granular form.

The granules typically have an average granular size of ≤ 1 cm, preferably ≥0.1 and ≤1 cm, as measured according to ISO 3310-1:2016.

The composition typically only has a low amount of nitrates, preferably being substantially free of nitrates. Nitrates are not needed for the soil supplement and it is desirable to not contribute to nitrate accumulation in the soil.

The examples and embodiments discussed above in connection to the first and second aspects apply to the third aspect *mutatis mutandis.*

As a fourth aspect of the present disclosure, there is provided use of the composition according to the third aspect as a soil supplement in agriculture.

Use as a soil supplement in agriculture includes farming, horticulture, and forestry.

The examples and embodiments discussed above in connection to the first, second and third aspects apply to the fourth aspect *mutatis mutandis.*

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

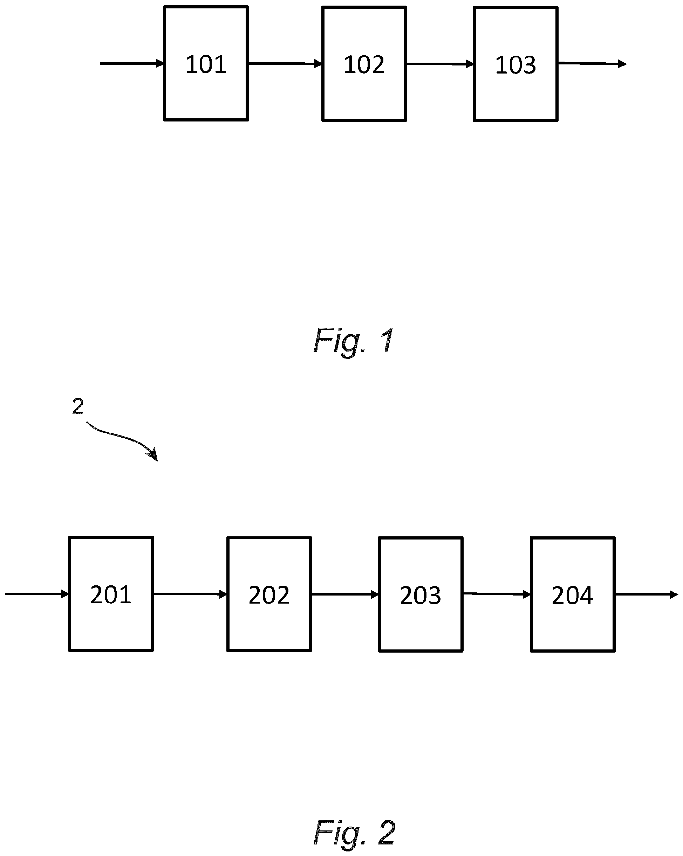

Fig. 1 shows an example of method steps of the method of the first aspect. In the step 101 biomass is provided, followed by step 102 where the biomass is treated at a temperature of ≥ 300 °C to form biochar, and in step 103 the formed biochar is impregnated with pyroligneous acid so that an impregnated biochar composition is formed, wherein the composition comprises:
- 10-60 wt% pyroligneous acid based on the dry content of the composition; and
- 40-90 wt% biochar based on the dry content of the composition.

Fig. 2 shows an example of a system 2 for production of an impregnated biochar composition. The system 2 comprises a reactor 201, an impregnation tank 202, a compressor device 203 and a granulation device 204. The reactor 201 is configured for treatment of biomass at a temperature of ≥ 300 °C to form biochar. The compressor device 203 compresses the impregnated biochar. The granulation device 204 forms granules of the impregnated biochar, wherein the formed granules in the granulation device have an average granular size of ≤ 1 cm as measured according to ISO 3310-1:2016.

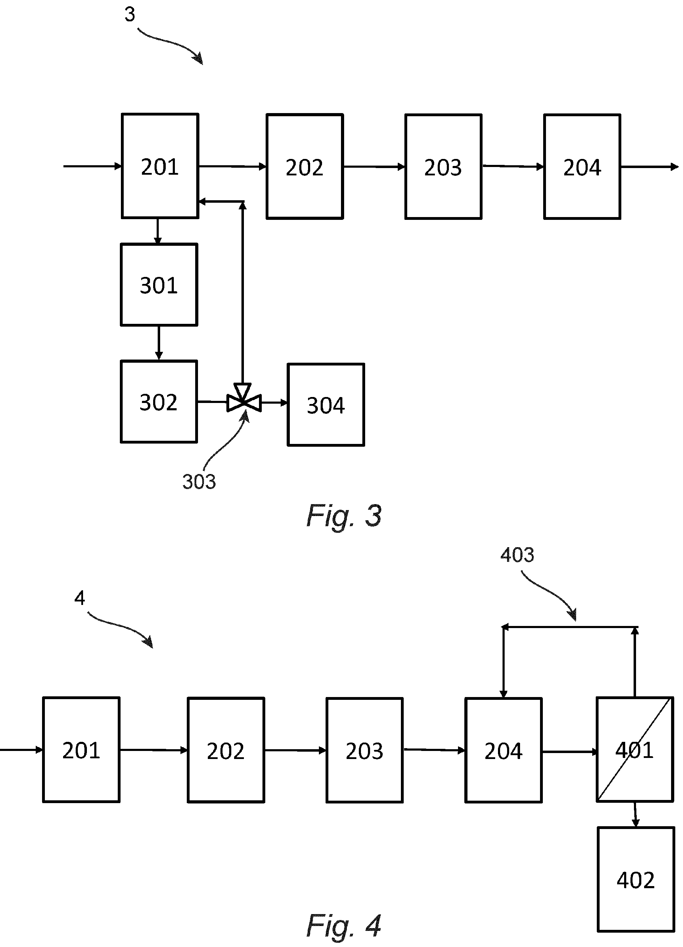

Fig. 3 show another example of a system 3 for production of an impregnated biochar composition. The system 3 comprises a reactor 201, an impregnation tank 202, a compressor device 203, a granulation device 204, a first separation arrangement 301 configured for separation of syngas from the reactor 201, a second separation arrangement 302 for separation of hydrogen gas from the syngas, a routing arrangement 303 for routing the hydrogen gas to a heater (not shown) of the reactor 201 or to a collection unit 304 for collecting the hydrogen gas.

Fig. 4 shows yet another example of a system 4 for production of an impregnated biochar composition. The system 4 comprises a reactor 201, an impregnation tank 202, a compressor device 203, a granulation device 204, a separation arrangement for separating granules of impregnated biochar having a size within a desirable range to a collection 402 unit for collecting granules of impregnated biochar, and a routing arrangement 403 for routing granules of size outside the desirable range to the compressor device 203.

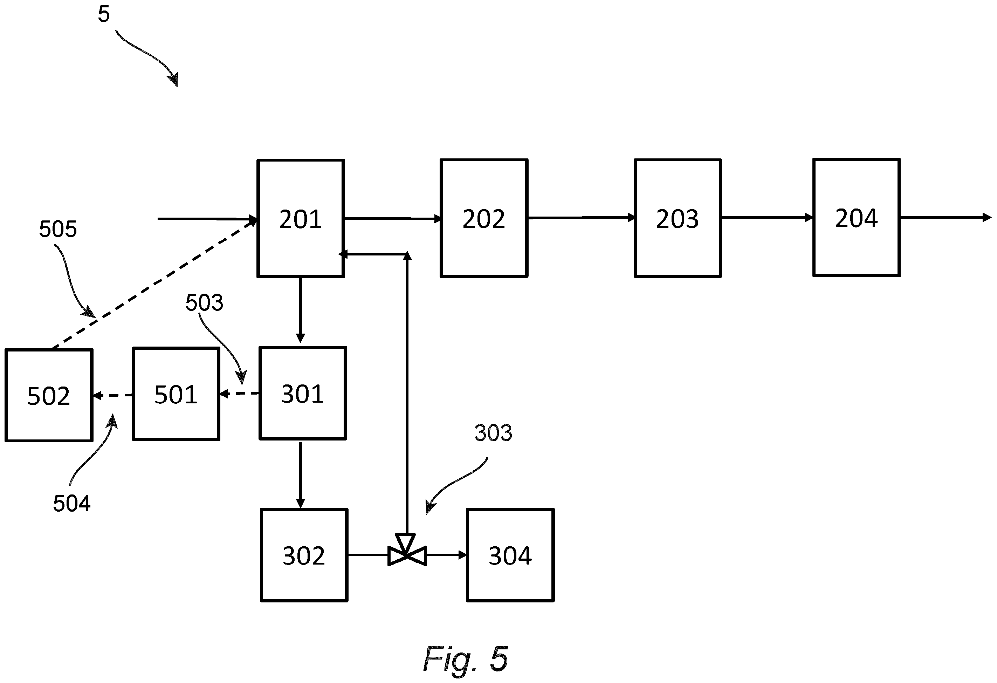

Fig. 5 show another example of a system 5 for production of an impregnated biochar composition. The system 5 comprises a reactor 201, an impregnation tank 202, a compressor device 203, a granulation device 204, a first separation arrangement 301 configured for separation of syngas from the reactor 201, a second separation arrangement 302 for separation of hydrogen gas from the syngas, a routing arrangement 303 for routing the hydrogen gas to a heater (not shown) of the reactor 201 or to a collection unit 304 for collecting the hydrogen gas, a hydrogen gas sensor 501 configured to determine a hydrogen gas content of the syngas output from the first separation arrangement 301 and a control unit 502. The control unit 502 is configured to: receive 503, from the hydrogen gas sensor 501, a signal 504 indicative of a hydrogen gas content; compare the received hydrogen gas content with a predetermined hydrogen gas content threshold value; and if the received hydrogen gas content is below the predetermined threshold value, provide a signal 505 indicative of a too low hydrogen gas content. The control unit is, preferably further configured to: if the received hydrogen gas content is below the predetermined threshold value, increase/decrease a temperature and/or increase/decrease heating rate and/or increase/decrease residence time in the reactor 201.

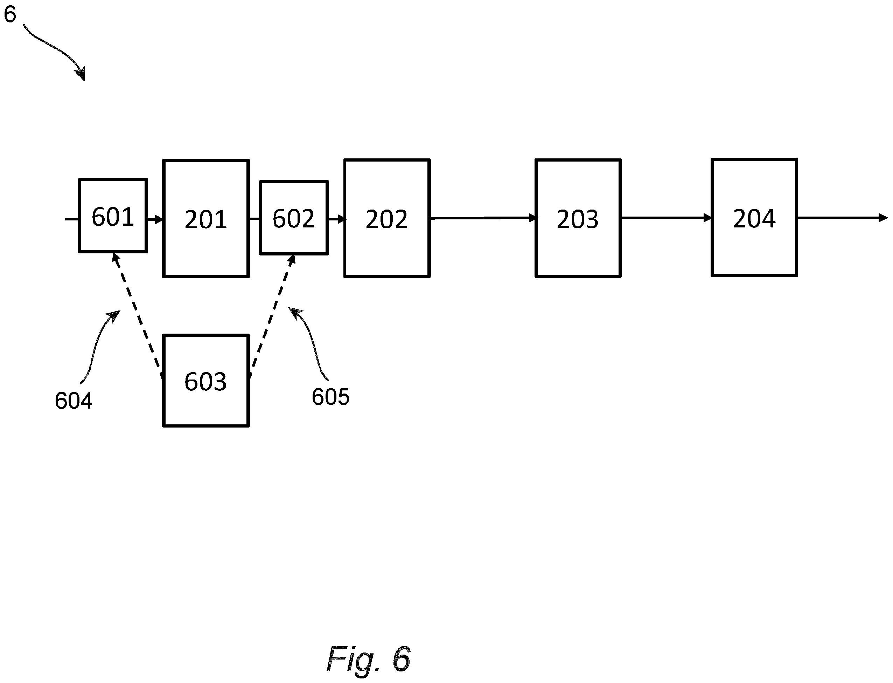

Fig. 6 show another example of a system 6 for production of an impregnated biochar composition. The system 6 comprises a reactor 201, an impregnation tank 202, a compressor device 203, a granulation device 204, a first weighing device 601 configured to weigh an amount biomass being supplied to the reactor, and a second weighing device 602 configured to weigh an amount of biochar being provided from the reactor, and a control unit 603. The control unit 603 is configured to: receive, from the first weighing device 601, a biomass weight 604; receive, from the second weighing device 602, a biochar weight 605; compare the biochar weight with the biomass weight and if a quota between biochar weight and biomass weight is below a predetermined weight quota threshold value, increase/decrease a temperature and/or increase/decrease heating rate and/or increase/decrease residence time in the reactor 201.

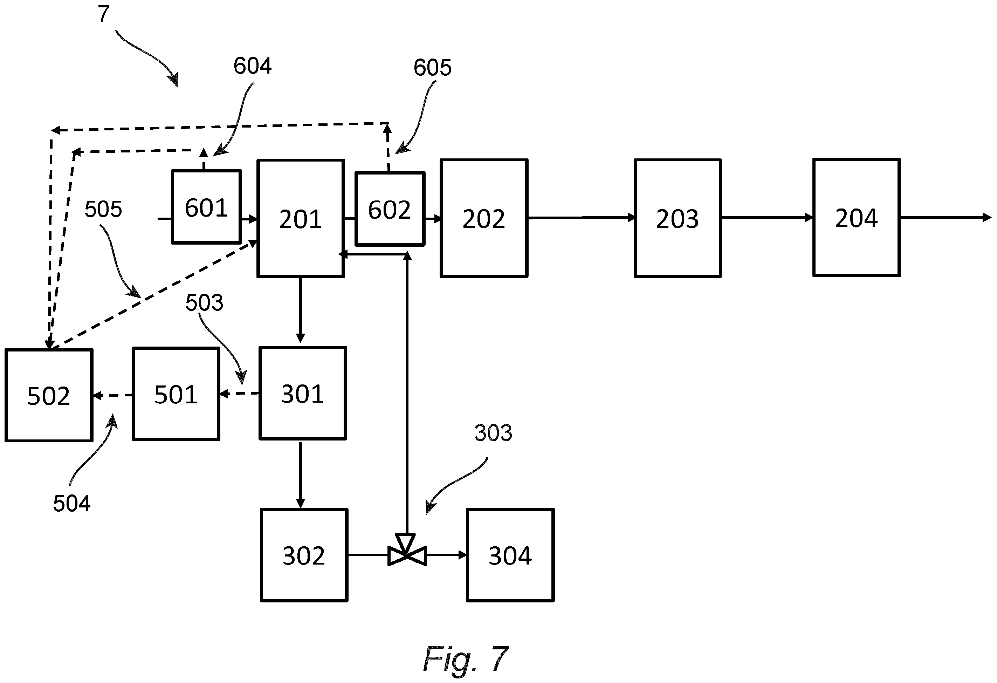

Fig. 7 show another example of a system 7 for production of an impregnated biochar composition. The system 7 comprises a reactor 201, an impregnation tank 202, a compressor device 203, a granulation device 204, a first weighing device 601 configured to weigh an amount biomass being supplied to the reactor, and a second weighing device 602 configured to weigh an amount of biochar being provided from the reactor, a first separation arrangement 301 configured for separation of syngas from the reactor 201, a second separation arrangement 302 for separation of hydrogen gas from the syngas, a routing arrangement 303 for routing the hydrogen gas to a heater (not shown) of the reactor 201 or to a collection unit 304 for collecting the hydrogen gas, a hydrogen gas sensor 501 configured to determine a hydrogen gas content of the syngas output from the first separation arrangement 301 and a control unit 502. The control unit 502 is configured to: receive, from the first weighing device 601, a biomass weight 604; receive, from the second weighing device 602, a biochar weight 605; compare the biochar weight with the biomass weight and if a quota between biochar weight and biomass weight is below a predetermined weight quota threshold value, increase/decrease a temperature and/or increase/decrease heating rate and/or increase/decrease residence time in the reactor 201; and receive 503, from the hydrogen gas sensor 501, a signal 504 indicative of a hydrogen gas content; compare the received hydrogen gas content with a predetermined hydrogen gas content threshold value; and if the received hydrogen gas content is below the predetermined threshold value, provide a signal 505 indicative of a too low hydrogen gas content, and further configured to: if the received hydrogen gas content is below the predetermined threshold value, increase/decrease a temperature and/or increase/decrease heating rate and/or increase/decrease residence time in the reactor 201.

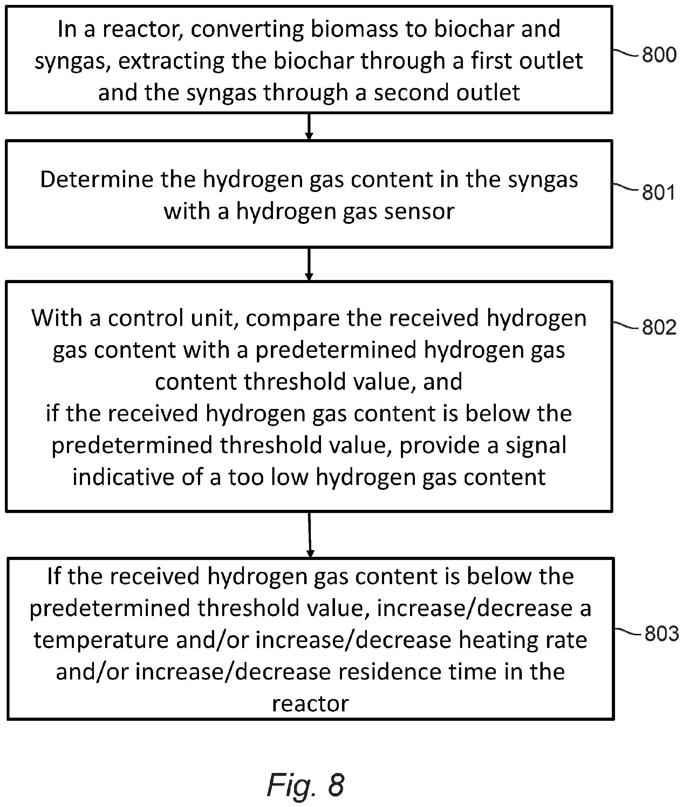

Fig. 8 is a flow chart outlining steps of a method of adapting the process for production of biochar and hydrogen gas. The method comprises: in a reactor 201, converting 800 biomass to biochar and syngas, extracting the biochar through a first outlet and the syngas through a second outlet. Determine 801 the hydrogen gas content in the syngas with a hydrogen gas sensor. Comparing 802 the received hydrogen gas content with a predetermined hydrogen gas content threshold value, and if the received hydrogen gas content is below the predetermined threshold value, provide a signal indicative of a too low hydrogen gas content. If the received hydrogen gas content is below the predetermined threshold value, increase/decrease a temperature and/or increase/decrease heating rate and/or increase/decrease residence time 803 in the reactor.

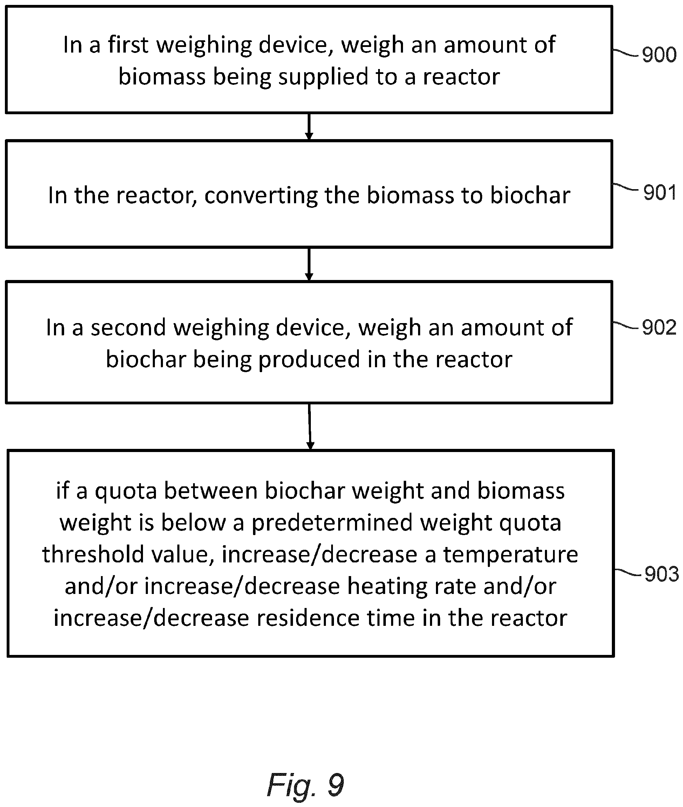

Fig. 9 is a flow chart outlining steps of a method of adapting the process for production of biochar. The method comprises: in a first weighing device, weighing 900 an amount of biomass being supplied to a reactor; in the reactor, converting 901 the biomass to biochar; in a second weighing device, weighing 902 an amount of biochar being produced in the reactor; and if a quota between biochar weight and biomass weight is below a predetermined weight quota threshold value, increase/decrease a temperature and/or increase/decrease heating rate and/or increase/decrease residence time 903 in the reactor.

### EXAMPLE

Biomass from agricultural and forests were treated via pyrolysis at about 600 °C to form biochar.

The biochar was impregnated with pyroligneous acid to a content of about 40 wt% pyroligneous acid, so that a composition containing 60 wt% biochar and 40 wt% pyroligneous acid based on dry weight of the composition was formed.

The composition was compressed to about half of the original volume and granulated to a size of about 0.5 cm having a weight of about 1 gram.

One granule per m² was planted in soil together with crops as an inventive example.

As comparative examples granules of only biochar and granules having a higher doses of pyroligneous acid, about 80 wt%, was separately planted in soil with crops.

In the inventive example, the crops thrived and grown at a high pace. In the comparative example not having any pyroligneous acid the crops did grow, but substantially slower. In the comparative example having a dose of about 80 wt% pyroligneous acid the crops instead died.

## Claims

1. Method for production of an impregnated biochar composition for use in agriculture, wherein the method comprises the following steps:
a) providing biomass;
b) treating the biomass at a temperature of ≥ 300 °C to form biochar;
c) impregnating the formed biochar with pyroligneous acid so that an impregnated biochar composition is formed, wherein the composition comprises:
- 10-60 wt% pyroligneous acid based on the dry content of the composition; and
- 40-90 wt% biochar based on the dry content of the composition.

2. The method of claim 1, wherein the biomass is treated at a temperature of 300-900 °C, such as 400-900 °C, such as 400-800 °C, such as 450-750 °C to form biochar in step b).

3. The method of claim 1 or 2, wherein the composition comprises 20-60 wt%, such as 25-55 wt%, such as 30-55 wt% pyroligneous acid based on the dry content of the composition.

4. The method of any one of the preceding claims, wherein the composition comprises 40-80 wt%, such as 45-75 wt%, such as 45-70 wt% biochar based on the dry content of the composition.

5. The method of any one of the preceding claims, wherein syngas is also produced in step b), and hydrogen gas is separated from the syngas.

6. The method according to any one of the preceding claims, wherein the method further comprises:
step d) compressing the impregnated biochar composition.

7. The method of claim 6, wherein the method further comprises step e) formation of granules from the compressed impregnated biochar composition, wherein the granules have an average granular size of ≤ 1 cm preferably ≥0.1 and ≤1 cm, as measured according to ISO 3310-1:2016.

8. A system for production of an impregnated biochar composition for use in agriculture comprising:
- a reactor configured to treat biomass at a temperature of ≥ 300 °C to form biochar;
- an impregnation tank configured to impregnate the biochar with pyroligneous acid arranged downstream of the reactor;
- a compressor device configured to compress the impregnated biochar; and
- a granulation device configured to form granules from compressed impregnated biochar composition, wherein the formed granules in the granulation device have an average granular size of ≤ 1 cm preferably ≥0.1 and ≤1 cm, as measured according to ISO 3310-1:2016.

9. The system of claim 8, wherein the system further comprises:
- a first separation arrangement configured to separate syngas from the reactor;
- a second separation arrangement configured to separate hydrogen gas from the syngas; and
- a routing arrangement configured to route the hydrogen gas to a heater of the reactor or to a collection unit for collecting the hydrogen gas.

10. The system of claim 9, further comprising:
- a hydrogen gas sensor arranged after the first separation arrangement and configured to determine a hydrogen gas content of the syngas output from the first separation arrangement; and
- a control unit configured to:
receive, from the hydrogen gas sensor, a signal indicative of a hydrogen gas content;
compare the received hydrogen gas content with a predetermined hydrogen gas content threshold value; and
if the received hydrogen gas content is below the predetermined threshold value, provide a signal indicative of a too low hydrogen gas content.

11. The system of claim 10, wherein the control unit is further configured to:
if the received hydrogen gas content is below the predetermined threshold value, increase/decrease a temperature and/or increase/decrease heating rate and/or increase/decrease residence time in the reactor.

12. The system of any one of the claims 9-11, further comprising:
a first weighing device configured the weigh an amount biomass being supplied to the reactor;
a second weighing device configured the weigh an amount of biochar being provided from the reactor; and
a control unit configured to:
receive, from the first weighing device, a biomass weight;
receive, from the second weighing device, a biochar weight;
compare the biochar weight with the biomass weight; and
if a quota between biochar weight and biomass weight is below a predetermined weight quota threshold value, increase/decrease a temperature and/or increase/decrease heating rate and/or increase/decrease residence time in the reactor.

13. An impregnated biochar composition for use in agriculture comprising:
- 10-60 wt% pyroligneous acid based on the dry content of the composition; and
- 40-90 wt% biochar based on the dry content of the composition.

14. The impregnated biochar composition according to claim 12, wherein the composition is in granular form, and the granules have an average granular size of ≤ 1 cm, preferably ≥0.1 and ≤1 cm, as measured according to ISO 3310-1:2016.

15. Use of the composition according to any one of the claims 13-14 as a soil supplement in agriculture.
